# EUROPEAN PATENT SPECIFICATION

(11) **EP 1 493 694 B1**
(45) Date of publication and mention of the grant of the patent: **17.01.2007**
(21) Application number: 04253463.6
(22) Date of filing: 10.06.2004
(51) Int. Cl.: B65G 47/244, B65G 21/20, B65G 47/84

(54) **Guide rail for container inspection machine**
Führungsschiene für einen Behälterinspektionsvorrichtung
Rail de guidage pour dispositif d'inspection de récipients

(30) Priority: 30.06.2003 US 610420
(43) Date of publication of application: 05.01.2005
(73) Proprietor: Emhart Glass S.A., 6330 Cham (CH)
(72) Inventor: Giometti, Stephen M., Horseheads New York 14845 (US)
(74) Representative: Warren, Anthony Robert

(56) References cited:
- US-A- 3 717 236
- US-A- 4 465 175
- US-A- 4 779 714

## Description

The present invention relates to machines which inspect containers such as bottles for defects and more particularly to such machines wherein a bottle is conveyed through one or more inspection stations via a star wheel conveyor.

In state of the art glass bottle inspection machines bottles are transferred to a star wheel conveyor which transports the bottles through a number of inspection stations.

In such machines the bottles are conventionally rotated at one or more of the inspection stations and as a result, should the bottles be non-round (a flask for example), the bottles would be released from the star wheel at a random orientation, and this is undesirable.

It is known from US-A-4,779,714 to provide an orienting device which is specifically designed to accept trigger pump cap assemblies of the type in which a trigger is spaced from a cap along a pump housing which is rotatable relative to the cap. The cap assemblies are introduced serially, in either one of first and second front-to-back orientations, along an arcuate path segment defined between the peripheral drive surface of a rotating drive wheel and an opposed stationary arcuate guide surface of elastomeric material, and are discharged in only the second one of the orientations. Each cap assembly is driven along the arcuate path segment by the peripheral drive surface which rolls the cap of the assembly along the stationary guide surface. A pusher member and slot are associated with the path segment. The pusher member rotates the pump housing into the slot if the cap assembly is in the first orientation to allow it to assume the required second orientation. If the cap assembly is already in the required second orientation, the pump housing, when pushed by the pusher member, is not aligned with the slot, and is prevented from rotating from its existing second orientation.

It is an object of the present invention to provide an orienting mechanism which will reorient a non-round container such as a bottle conveyed by a star wheel conveyor to a selected orientation prior to discharge.

According to the present invention, there is provided a machine for inspecting a container as defined in claim 1.

The present invention will now be described with reference to the accompanying drawings which illustrate a presently preferred embodiment incorporating the principles of the invention, and in which:
Figure 1 illustrates a segment of an indexing star wheel feeder releasing a bottle to a belt drive outfeed conveyor; and
Figure 2 is an enlarged elevational view of the brush guide rail shown in Figure 1.

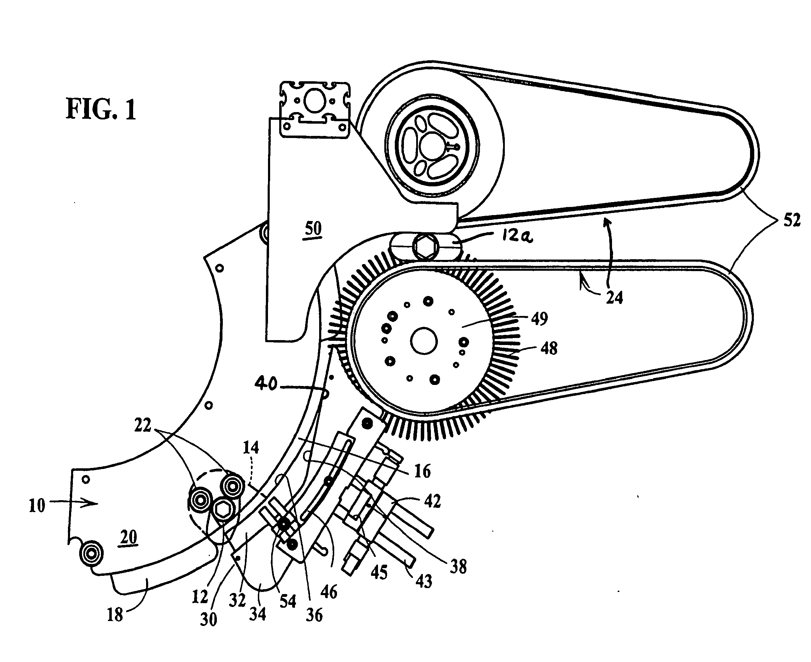

Figure 1 illustrates a segment of an indexing star wheel conveyor or feeder 10 of a container inspection machine. Non-round transparent containers 12, here a flask, enter the star wheel by use of a timing feed screw (not shown) which releases containers, one at a time, at a timed frequency that releases the containers into open pockets 14 in the star wheel. The containers are supported on a star wheel base plate 16. The pockets are defined in an intermediate plate or plates 18, and a top plate 20 supports roller pairs 22 which engage the finish or neck of the container and can be driven to rotate the container as desired.

The starwheel indexes rotationally a fixed amount and stops or dwells for a predetermined period of time so that an inspection can take place. The starwheel continues the index and dwell cycle, processing the container through the inspection stations. After the last inspection station, the container, as indicated at 12a, is removed from the starwheel and delivered to an opposed belt conveyor 24.

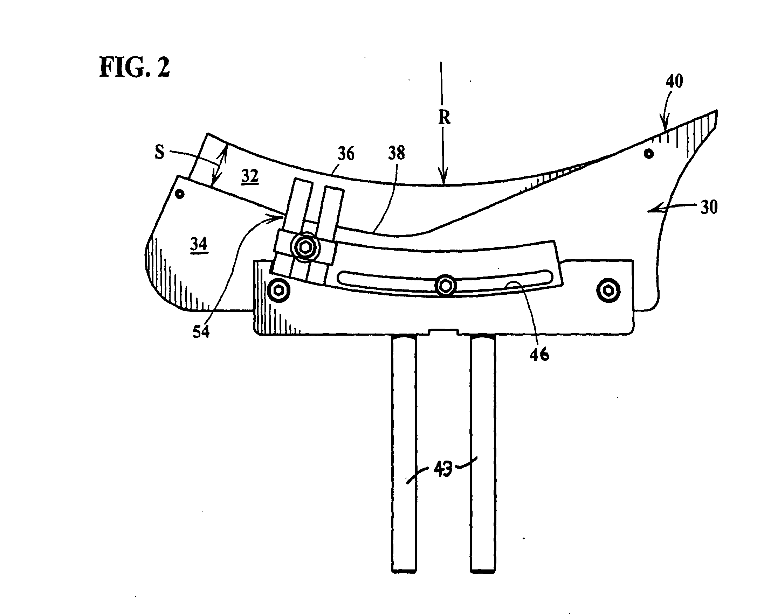

Figure 2 illustrates a brush guide rail 30 for rotating a randomly oriented container to a selected orientation. The brush guide rail has a linear nylon bristle brush 32 which is clamped between upper 34 and lower plates (the lower plate is not shown). The brush 32, when mounted (Fig.1), has a curved front edge 36 which is substantially concentric to the axis of the starwheel (radius R in Fig. 2), i.e. concentric to the circular path of the container, and is located so that the container, e.g. non-round bottle will be reoriented to an orientation within an angular range acceptable for transfer to the belt drive conveyor.

The upper 34 and lower plates have a curved front edge 38, which at the end remote from the belt conveyor is substantially spaced from the front edge of the brush (separation S), and which, as the brush approaches the belt conveyor, gradually decreases until this edge merges with the continuing concentric edge 40 of the upper and lower plates.

The brush guide rail is mounted on a suitable machine support 42 which can be displaced along a pair or rods 43 for radial displacement to radially locate the edge of the brush, and along a vertical slot 45 for vertical adjustment. The brush guide rail also includes an adjustment slot 46 for adjusting the front edge of the brush as desired.

As the container indexes by the brush 32, the brush will apply a progressively increasing resistive force to the outer edge of the container. Due to this force and the motion of the container, a rotational force will be applied to the container and the container will rotate to its desired orientation before it engages the front edge 40 of the plates.

An annular brush 48 on the adjacent belt drive pulley 49 will drag the released bottle 12a along a fixed rail 50 into the opposed drive belts 52 of the belt drive conveyor 24. In addition a tipping device 54 can be added, if desired, to assist in getting the container to rotate. The tipping device may be of elastomeric material and is adjustable axially.

## Claims

1. A machine for inspecting a container comprising
container outfeed means including a belt conveyor (24) having opposed drive belts (52) and a fixed rail (50) for receiving a container (12a) released from a starwheel conveyor (10),
a starwheel conveyor (10) rotatable about an axis and including a plurality of pockets (14) for holding randomly oriented non-round containers, said starwheel conveyor being operable to release oriented non-round containers to said container outfeed means,
brush guide rail means (30) for orienting a container randomly oriented within a star wheel pocket, including
a brush (32) having a front edge (36),
mounting means for mounting said brush with the front edge (36) of the brush at a location which would interfere with a misoriented container,
the front edge of the brush being substantially concentric to the axis of the star wheel, and
said mounting means including plate means (34) for clamping the brush, said plate means having a front edge (38) being radially spaced from the front edge (36) of the brush at the location where a misoriented non-round container will first engage the brush with the radial spacing decreasing to zero as the container is displaced along the brush,
the front edge (36) of the brush being selectively located so that the container will have an acceptable orientation at the location where the radial spacing is zero.

2. A machine for inspecting a container according to claim 1, wherein the front edge of said plate means (34) extends beyond the end of said brush, continuing the concentric front edge (36) of the brush.

## Patentansprüche

1. Behälterprüfmaschine mit:
einer Behälter-Austrageinrichtung mit einem Riemenförderer (24) mit gegenüberliegenden Antriebsriemen (52) und einer feststehenden Schiene (50) zur Aufnahme eines aus einem Sternrad-Förderer (10) freigegebenen Behälters (12a),
einem Sternrad-Förderer (10), der um eine Achse drehbar ist und eine Vielzahl von Taschen (14) zur Aufnahme regellos gerichteter, nicht runder Behälter enthält, wobei der Sternrad-Förderer nicht runde Behälter ausgerichtet an die Behälter-Austragvorrichtung übergeben kann, und
einer Bürstenführungsschiene (30), mit der ein regellos ausgerichteter Behälter in einer Sternradtasche orientierbar ist und die
eine Bürste (32) mit einer Vorderkante (36) und
eine Halterung aufweist, mit der die Vorderkante (36) der Bürste in eine Lage bringbar ist, in der sie an einem fehlorientierten Behälter angreift,
wobei die Vorderkante der Bürste im wesentlichen konzentrisch mit der Achse des Sternrads liegt,
die Halterung eine Plattenanordnung (34) zum Einspannen der Bürste aufweist, die eine Vorderkante (38) aufweist, die von der Vorderkante (36) der Bürste dort, wo ein nicht runder fehlorientierter Behälter von der Bürste zuerst berührt wird, radial beabstandet ist, und wobei der radiale Abstand mit der Verschiebung des Behälters entlang der Bürste auf Null abnimmt, und
die Vorderkante (36) der Bürste sich wahlweise so anordnen lässt, dass der Behälter dort, wo der radiale Abstand gleich Null ist, akzeptabel ausgerichtet ist.

2. Behälterprüfmaschine nach Anspruch 1, bei der die Vorderkante (38) der Plattenanordnung (34) über das Ende der Bürste hinaus verläuft und dabei die konzentrische Vorderkante (36) der Bürste fortsetzt.

## Revendications

1. Machine pour inspecter un récipient comprenant :
des moyens de sortie de récipient comprenant un transporteur à courroie (24) ayant des courroies d'entraînement opposées (52) et un rail fixe (50) pour recevoir un récipient (12a) libéré d'un convoyeur en étoile (10),
un convoyeur en étoile (10) pouvant tourner autour d'un axe et comprenant une pluralité de poches (14) pour contenir des récipients non ronds orientés de manière aléatoire, ledit convoyeur en étoile pouvant fonctionner pour libérer des récipients non ronds orientés vers lesdits moyens de sortie de récipient,
des moyens de rail de guidage à brosse (30) pour orienter un récipient orienté de manière aléatoire à l'intérieur d'une poche en étoile, comprenant :
une brosse (32) ayant un bord avant (36),
des moyens de montage pour monter ladite brosse avec le bord avant (36) de la brosse à un endroit qui interfère avec un récipient mal orienté,
le bord avant de la brosse étant sensiblement concentrique par rapport à l'axe de l'étoile, et
lesdits moyens de montage comprenant des moyens de plaque (34) pour serrer la brosse, lesdits moyens de plaque ayant un bord avant (38) qui est espacé de manière radiale du bord avant (36) de la brosse à l'endroit où le récipient non rond mal orienté met tout d'abord en prise la brosse avec l'espacement radial diminuant jusqu'à zéro lorsque le récipient est déplacé le long de la brosse,
le bord avant (36) de la brosse étant positionné de manière sélective de sorte que le récipient a une orientation acceptable à l'endroit où l'espacement radial est de zéro.

2. Machine pour inspecter un récipient selon la revendication 1, dans laquelle le bord avant (38) desdits moyens de plaque (34) s'étend au-delà de l'extrémité de ladite brosse, continuant par le bord avant concentrique (36) de la brosse.
